# EUROPEAN PATENT APPLICATION

(11) **EP 2 750 394 A2**
(43) Date of publication of application: **02.07.2014**
(21) Application number: 13178688.1
(22) Date of filing: 31.07.2013
(51) Int. Cl.: H04N 21/2343, H04N 21/24, H04N 21/262, H04N 21/6373

(54) **Real-time content transcoding**

(30) Priority: 28.12.2012 KR 20120156117; 09.07.2013 KR 20130080455
(71) Applicant: Humax Co., Ltd., Seongnam-si, Gyeonggi-do 463-825 (KR)
(72) Inventor: Kim, Tae Gap, Seongnam-si, Gyeonggi-do 463-440 (KR)
(74) Representative: Vossius & Partner

(57) **Abstract**

A real-time content transcoding method, apparatus, and system, and a real-time content receiving apparatus and method are provided. The real-time content transcoding method includes: generating a candidate content list on the basis of a transcoding-related information supportable by a transcoder with respect to content requested by a user terminal; transmitting the candidate content list to the user terminal; and transcoding the content in a manner corresponding to a content information selected by the user terminal in real time and transmitting the transcoded content to the user terminal.

## Description

The present invention relates to live streaming and, more particularly, to live streaming based on real-time transcoding.

Recently, with the advancement of communications technologies, various user terminals such as a mobile communication terminal, a personal digital assistant (PDA), a portable multimedia player (PMP), a smart phone, and the like, have been developed and commercialized, and users are provided with various types of services using user terminals.

For a multimedia contents service, among services provided through user terminals, a server may be accessed to download or receive a video, a music video, movie, broadcast programs, or the like, in a streaming manner and rendered. However, provided multimedia contents have the characteristics of various formats, such as MP4, AVI, or the like, a bit rate, and the like, and in order to play the multimedia contents in a receiver according to characteristics thereof, appropriate equipment such as a codec, or the like, is required.

However, a user terminal, such as a portable terminal, whose CPU or memory are limited in specification thereof or a VOD server operating without equipment such as a CPU or a large hard disk drive (HDD) has various limitations in providing contents services.

Also, it is difficult to process a large amount of data in real time, and it is impossible to normally play high quality multimedia contents.

For example, an HTTP live streaming (HLS) scheme has been provided as a conventional streaming scheme for multimedia contents services. The HLS scheme is to prepare files at various bit rates in advance with respect to contents requested by users, and among them, a file appropriate for a current network situation is transmitted.

However, in the case of the HLS scheme, since files at various bit rates should be generated in advance, it is not appropriate for an environment without a large capacity database, and in particular, utility thereof is degraded in live streaming that requires real-time processing.

The present invention provides a real-time content transcoding method, apparatus, and system, and real-time content receiving apparatus and method capable of providing multimedia content in real time on the basis of a server without a large capacity hard disk drive (HDD).

In an aspect, a real-time content transcoding method includes: generating a candidate content list on the basis of a transcoding-related information supportable by a transcoder with respect to content requested by a user terminal; transmitting the candidate content list to the user terminal; and transcoding the content such that it corresponds to content information selected by the user terminal in real time and transmitting the same to the user terminal.

The candidate content list may include at least any one of information among a compression format, a bit rate, an output file and a file format supportable by the transcoder.

The candidate content list may provide a uniform resource locator (URL) providing the content, and in the transcoding of the content, the content may be transcoded at a bit rate corresponding to the selected URL and transmitted.

The transcoding of the content may include: transcoding the content, while adjusting a bit rate adaptively on the basis of a network state, and transmitting the same.

The transcoding of the content may include: receiving information regarding a network state from the user terminal in real time; and comparing the received information regarding the network state with a current bit rate, and changing the bit rate.

The transcoding of the content may include: predicting a change in a network environment through the received information regarding a network state; when a change in a network environment is predicted, transcoding content to be rendered for a predetermined period of time and storing the same in advance in preparation for a change in a bit rate; and transmitting the content without buffering by using the stored content at a point in time at which the bit rate is changed.

The server may transmit the content in a HTTP live streaming (HLS) manner, such that the server may segment the content by the time, transcode the same, and transmit the content to the user terminal.

In another aspect, a real-time content transcoding apparatus includes: a candidate content list generating unit configured to generate a candidate content list on the basis of transcoding-related information supportable by a transcoder with respect to content requested by a user terminal; a candidate content list transmission unit configured to transmit the candidate content list to the user terminal; and a transcoding unit configured to transcode the content in real time such that it corresponds to content information selected by the user terminal, and transmit the same to the user terminal.

In another aspect, a real-time content receiving method includes: receiving a candidate content list generated on the basis of a transcoding-related information supportable by a transcoder with respect to requested content; transmitting a signal related to selection of one of contents included in the candidate content list to a server; and receiving content transcoded such that it corresponds to information indicated by the selection-related signal, in real time.

The transmitting of the selection-related signal may include: generating the selection-related signal on the basis of the information regarding transcoding corresponding to a scheme available to be received and rendered by the user terminal, or generating the selection-related signal on the basis of information input through a user interface (UI), and transmitting the same to the server.

The candidate content list may include at least any one of information among a compression format, a bit rate, an output file and a file format supportable by the transcoder.

The receiving of the content may include: receiving the content, while adjusting a bit rate adaptively on the basis of a network state.

The receiving of the content may include: monitoring the network state; and transmitting information regarding a network state to the server in real time.

In another aspect, a real-time content receiving apparatus including: a list reception unit configured to receive a candidate content list generated on the basis of a transcoding-related information supportable by a transcoder that transcodes requested content; a selection-related signal transmission unit configured to transmit a signal related to selection of one of contents included in the candidate content list to the server; and a content reception unit configured to receive content transcoded such that it corresponds to information indicated by the selection-related signal.

In another aspect, a real-time content transcoding system includes: a server configured to generate a candidate content list on the basis of a transcoding-related information supportable by a transcoder with respect to content requested by a user terminal, transmit the generated candidate content list to the user terminal, transcode the content in real time such that it corresponds to content information selected by the user terminal, and transmit the transcoded content to the user terminal; and a user terminal configured to receive the candidate content list, transmit a signal related to selection of one of contents included in the candidate content list to the server, and receive content transcoded in real time such that it corresponds to information indicated by the selection-related signal.

In case of the real-time content transcoding method, apparatus, and system, and the real-time content receiving apparatus and method according to embodiments of the present invention, even in an environment without large capacity HDD, multimedia content can be provided in a manner desired by a user, and thus, both a content provider and a content user can effectively utilize a multimedia service.
FIG. 1 is a block diagram schematically illustrating a configuration of a real-time content transcoding system according to an embodiment of the present invention;
FIG. 2 is a flow chart illustrating an operation between the real-time content transcoding system and a user terminal according to an embodiment of the present invention.
FIG. 3 is a view illustrating an example of a candidate content list provided by a server of the real-time content transcoding system according to an embodiment of the present invention;
FIG. 4 is a view illustrating connections between the candidate content list of the real-time content transcoding system according to an embodiment of the present invention and uniform resource locators (URLs);
FIG. 5 is a flow chart illustrating a process of adjusting a bit rate by a server of the real-time content transcoding system according to an embodiment of the present invention according to a network environment;
FIG. 6 is a flow chart illustrating an operation of a user terminal of the real-time content transcoding system according to an embodiment of the present invention;
FIG. 7 is a view illustrating a streaming protocol applicable to a real-time content transcoding method according to an embodiment of the present invention; and
FIG. 8 is a view illustrating bit rates of content according to a change in a network environment in HLS streaming according to an embodiment of the present invention.

The present invention may be variously modified and various embodiments, and hereinafter, specific embodiments will be described in detail with reference to the accompanying drawings.

However, it should be understood that the following exemplifying description of the invention is not meant to restrict the invention to specific forms of the present invention but rather the present invention is meant to cover all modifications, similarities and alternatives which are included in the spirit and scope of the present invention. Terms "and/or" are understood as including any combinations presented by one or more relevant items.

While terms such as "first" and "second," etc., may be used to describe various components, such components must not be understood as being limited to the above terms. The above terms are used only to distinguish one component from another. For example, a first component may be referred to as a second component without departing from the scope of rights of the present invention, and likewise a second component may be referred to as a first component.

It will be understood that when an element is referred to as being "connected to" another element, it can be directly connected to the other element or intervening elements may also be present. In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements.

The terminology used herein is used for the purpose of describing particular embodiments only and is not intended to be limiting of the invention. Also, as used herein, singular forms "a", "an" and "the" are intended to include the plural forms as well, unless the context clearly indicates otherwise. It will be further understood that terms such as "including" or "having," etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

The terminology used herein is for the purpose of describing particular embodiments only and is not intended to be limiting of the invention. Unless otherwise defined, all terms used herein have the same meaning as commonly understood by one of ordinary skill in the art to which this invention pertains, and should not be interpreted as having an excessively comprehensive meaning nor as having an excessively contracted meaning. If technical terms used herein is erroneous that fails to accurately express the technical idea of the present invention, it should be replaced with technical terms that allow the person in the art to properly understand. The general terms used herein should be interpreted according to the definitions in the dictionary or in the context and should not be interpreted as an excessively contracted meaning.

Embodiments of the present invention will be described below in detail with reference to the accompanying drawings, where those components are rendered the same reference number that are the same or are in correspondence, regardless of the figure number, and redundant explanations are omitted.

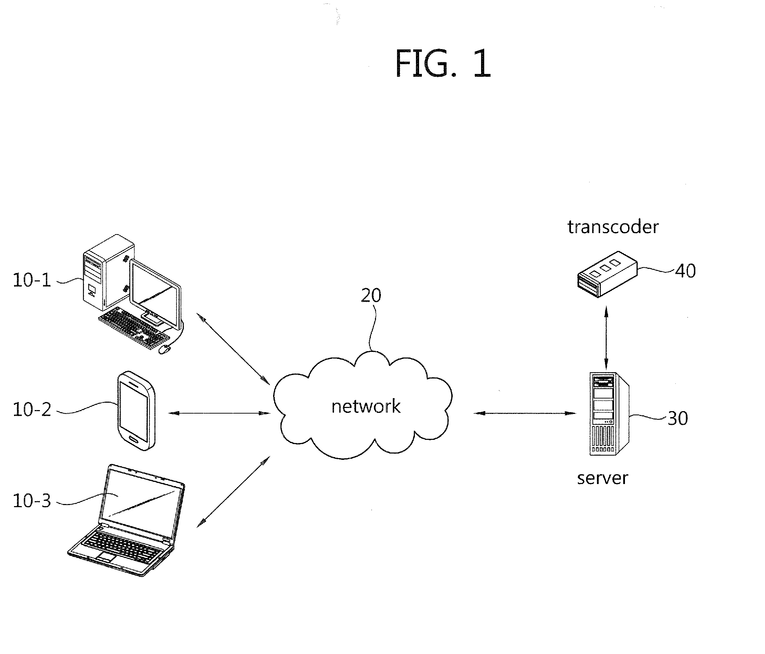

FIG. 1 is a block diagram schematically illustrating a configuration of a real-time content transcoding system according to an embodiment of the present invention. As illustrated in FIG. 1, the real-time content transcoding system according to an embodiment of the present invention may include user terminals 10-1, 10-2, and 10-3, a network 20, and a server 30. Also, according to circumstances, the real-time content transcoding system according to an embodiment of the present invention may further include an external transcoder 40. The user terminals 10-1, 10-2, and 10-3 may not be necessarily three; more or less than three user terminals may be provided.

Referring to FIG. 1, the user terminals 10-1, 10-2, and 10-3, devices for rendering multimedia content, may download or stream content in real time. For example, the user terminals 10-1, 10-2, and 10-3 may use downloaded content at a desired time, or may play content while downloading it in real time through streaming. The user terminals 10-1, 10-2, and 10-3 may be a personal computer (PC), a portable terminal, a notebook computer, a portable multimedia player (PMP), a personal digital assistant (PDA), a smart phone, or the like, but the present invention is not limited thereto.

The network 20 may be a wired or wireless network. The network connects the user terminals 10-1, 10-2, and 10-3 to the server 30 such that they transmit and receive data to and from each other.

The server 30 is a device providing multimedia content to the user terminals 10-1, 10-2, and 10-3 in real time. The server 30 may include a component for storage as a space for storing the content. However, the repository may not necessarily have large capacity. The server 30 may include a transcoder therein, or an external transcoder 40 may be utilized. Namely, software related to transcoding may be installed in the server 30 to allow the server 30 to perform transcoding by itself, or the server 30 may request the external transcoder 40 to perform transcoding through communication with the external transcoder 40, based on which the server 30 may provide a multimedia content server to the user terminals 10-1, 10-2, and 10-3.

With respect to the content requested by the user terminals 10-1, 10-2, and 10-3, the server 30 generates a candidate content list on the basis of information regarding transcoding the transcoder 40 that transcodes the content may be able to support, and transmits the generated candidate content list to the user terminals 10-1, 10-2, and 10-3. This may be considered a fake list. The reason is because, the user terminals 10-1, 10-2, and 10-3 may determine that content on the candidate content list is retained by the server 30, but in actuality, content on the candidate content list may be content supportable through transcoding, rather than being currently retained by the server 30.

The server 30 receives a signal related to selecting of one of the candidate content list from the user terminals 10-1, 10-2, and 10-3. The server 30 may transcode the content in real time in such a manner that the content corresponds to information indicated by the selecting-related signal received from the user terminals 10-1, 10-2, and 10-3.

Alternatively, when the server 30 uses the external transcoder 40, the server 30 may request the external transcoder to transcode content in a manner desired by the user terminals 10-1, 10-2, and 10-3 and provide the same.

In the case in which the external transcoder 40 is included, the external transcoder 40 may be a hardware transcoder. However, the external transcoder 40 is not necessarily limited to a hardware transcoder and may be a different type transcoder. The external transcoder 40 may be connected to the server through a fixed line or wirelessly, and may transmit and receive a signal to and from the server 30. The external transcoder 40 or a transcoder included in the server 30 may have information regarding transcoding including a supportable format, bit rate, or the like. For example, the a first transcoder may support only an AVI format in the form of an output file, while a second transcoder may support even an MP4 file as well as AVI. Since respective transcoders may have different transcoding capabilities, the server 30 provides transcoding factor information to the user terminals 10-1, 10-2, and 10-3 to allow the user terminals 10-1, 10-2, and 10-3 to easily perform rendering.

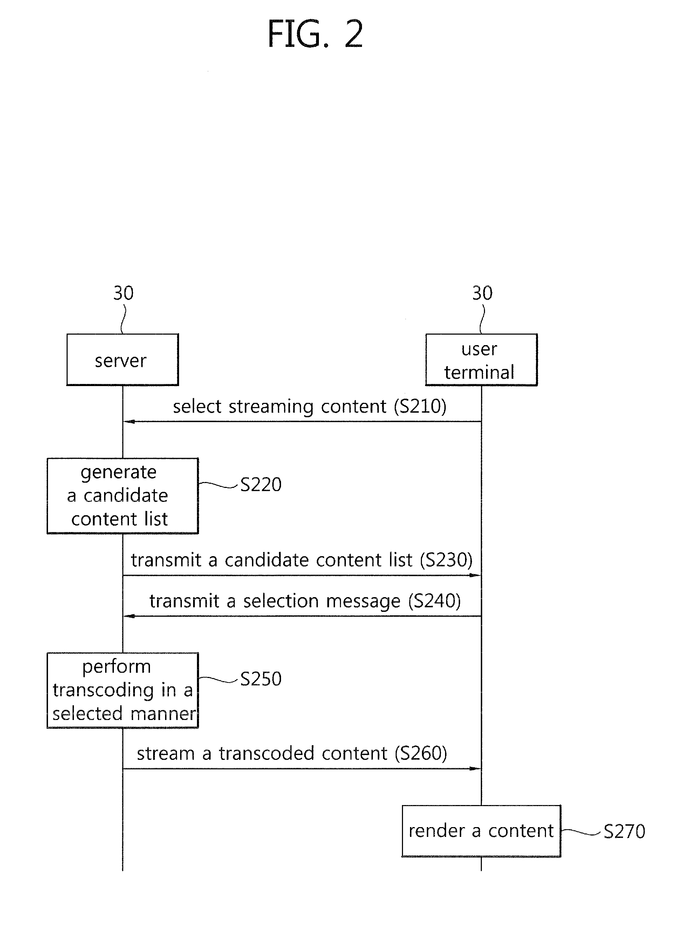

FIG. 2 is a flow chart illustrating an operation between the real-time content transcoding system and a user terminal according to an embodiment of the present invention.

Referring to FIG. 2, the user terminal 10 selects content desired to be streamed and informs the server 30 about the selected content (S210). This process may be performed by receiving a content selection-related signal. The server 30 generates a candidate content list indicating various compression formats, bit rates, output file forms, and the like, on the basis of the content desired by the user terminal 10 (S220). If a transcoder is disposed outside, the server 30 receives the information regarding transcoding from the external transcoder. The server 30 generates a candidate content list on the basis of the received information.

According to an embodiment of the present invention, the server 30 generates a candidate content list on the basis of transcoding-related indices supportable by an internal or external transcoder through transcoding. Namely, when an external transcoder supports compression formats H.264 and MPEG4, two candidate contents may be generated for the same content according to the respective compression formats H.264 and MPEG 4.

According to another embodiment of the present invention, the server 30 may utilize a plurality of transcoders and generate a candidate content list by integrating transcoding-related indices of the plurality of transcoders. Namely, repeated candidate contents of the transcoders may be unified into single candidate content.

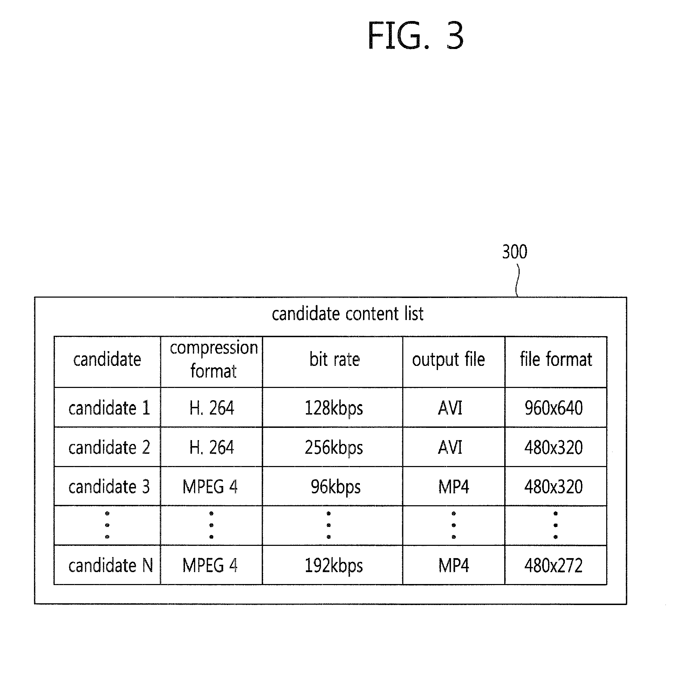

FIG. 3 is a view illustrating an example of a candidate content list provided by a server of the real-time content transcoding system according to an embodiment of the present invention.

Referring to FIG. 3, a candidate content list 300 includes candidate content items, and each candidate has at least any one information among a compression format, a bit rate, an output file, and a file format. First, candidate 1 is particular content transcoded such that it follows H.264 standard technique and has a bit rate 128kbps, an output file thereof has an AVI format, and a file size is 960x640. Also, candidate 2 is content transcoded to be mostly the same as the candidate 1, except that a bit rate thereof is 256kbps and a file format is 480x320. Candidate 3 is content transcoded to be different from the candidate 1 in the compression format, the bit rate, the output file, and the file format. However, the present invention is not necessarily limited to the foregoing information, and any information other than the foregoing information may be provided through the candidate content list 300. For example, information regarding a URL address at which the candidate content is downloaded or streamed may be provided.

In this manner, with respect to content selected by the user terminal 10, the candidate content list 300 may be generated with the transcoding indices supportable by the transcoder (which may be disposed within or outside the server).

Referring back to FIG. 2, when the candidate content list is completely generated (S200), the server 300 transmits the generated candidate content list to the user terminal 30 (S230). When the candidate content list is received, the user terminal 10 may determine that candidate contents included in the candidate content list have all been transcoded and retained by the server 30. The user terminal 10 selects candidate content suiting a rendering environment such as a codec, a player, or the like, and transmits a select message to the server (S240). The user terminal 10 may directly generate a select message on the basis of information regarding transcoding corresponding to a method available for receiving and rendering in the terminal, and transmit the same to the server 30, or may receive content, which has been selected by the user from the candidate content list, from the user through a user interface, generate a select message, and transmit the same to the server 30. Here, the user terminal 10 transmits a message selecting a URL address presented in the candidate list, so that the server 30 may provide candidate content corresponding to the selected URL address to the user terminal 10.

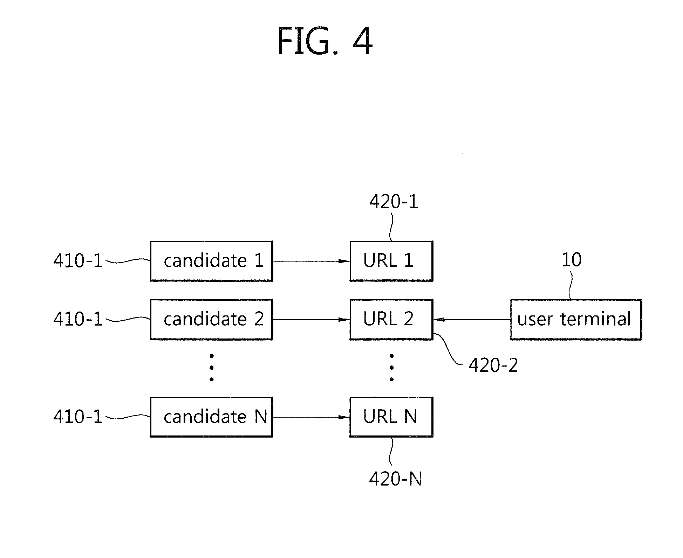

FIG. 4 is a view illustrating connections between the candidate content list of the real-time content transcoding system according to an embodiment of the present invention and uniform resource locators (URLs).

Referring to FIG. 4, the respective candidate contents 410-1, 410-2, ..., 410-N included in the candidate content list may be provided together with corresponding URLs 420-1, 420-2, ..., 420-N. The user terminal 10 may select any one of the provided URLs 420-1, 420-2, ..., 420-N of the candidate contents 410-1, 410-2, ..., 410-N. If the user terminal 10 transmits a select message indicating selection of the URL 2 420-2 to the server 30, the server 30 may transcode the content at a bit rate (which can be replaced with different transcoding information) corresponding to the selected URL 2 420-2. If a transcoder outside the server 30 is used, the server 30 may request the external transcoder to transcode the content at a bit rate corresponding to the URL 2 420-2 and provide the same.

Referring back to FIG. 2, when the transmitting of the select message by the user terminal 10 is completed (S240), the server 30 performs transcoding in a manner corresponding to the information regarding transcoding of the selected candidate content (S250). Here, in the case of utilizing the external transcoder, the server transmits information regarding transcoding of the selected candidate content to the external transcoder. Thereafter, the server 30 transmits content data and requests the external transcoder to transcode the content data such that it is appropriate for the selection of the user terminal 10. The external transcoder receives the content data and the selected information regarding transcoding from the server 30 and perform transcoding according to the selected scheme.

Thereafter, the server 30 downloads or streams transcoded content to the user terminal 10 (S260). Here, the content transcoded through the external transcoder may be transmitted to the server 30 and provided to the user terminal 10 or may be directly provided from the external transcoder to the user terminal 10.

According to an embodiment of the present invention, in providing content, the server 30 may provide content to the user terminal 10, while adjusting a bit rate of the content according to a network environment.

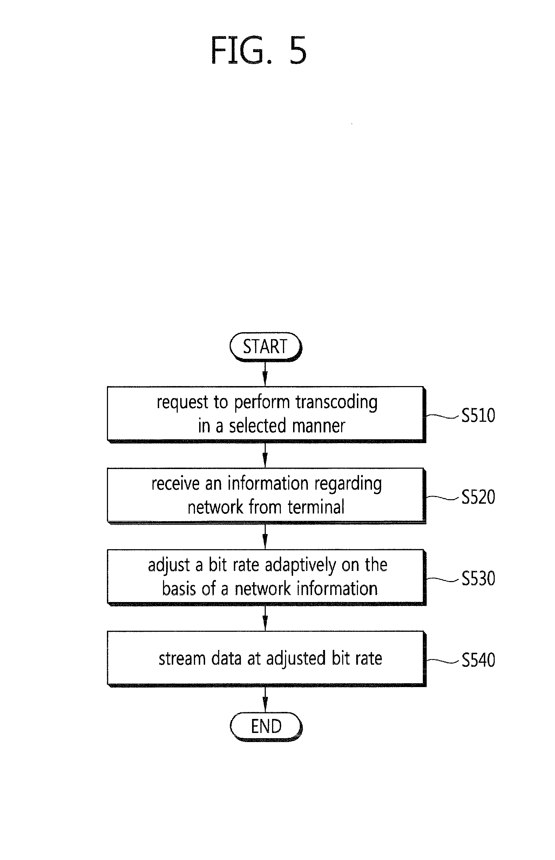

FIG. 5 is a flow chart illustrating a process of adjusting a bit rate by the server 30 of the real-time content transcoding system according to an embodiment of the present invention according to a network environment.

Referring to FIG. 5, in case of using an external transcoder, the server 30 may request the external transcoder to perform transcoding according to a selected method as described above (in a case in which the server 30 includes a transcoder therein, this process may be disregarded) (S510). Upon the request, content is transcoded and provided to the user terminal 10 in real time. Thus, content is provided to the user terminal 10 only at a bit rate irrespective of a network environment, namely, only at a fixed bit rate. Here, if the network environment is changed, since the change in the environment is not reflected, transmission of transcoded data may be delayed, causing degradation of picture quality (or image quality) or aggravation of buffering delay in the event of real time rendering.

Thus, the server 30 receives information regarding a network from the terminal in real time (S520), and adjusts a bit rate adaptively on the basis of the received network information (S530). The server 30 performs transcoding on the basis of the adjusted bit rate and streams the transcoded data to the user terminal 10(S540).

Here, in case of utilizing an external transcoder, the process up to receiving network information is performed in the same manner, but a process of transmitting information regarding a bit rate adjusted in the server 30 to the external transcoder is required. The external transcoder receives the information regarding the adjusted bit rate from the server 30, performs transcoding on the basis of the received information, and provides the transcoded content to the user terminal 10.

Referring back to FIG. 2, after the streaming (S260), the user terminal 10 renders the streamed content in real time (S270).

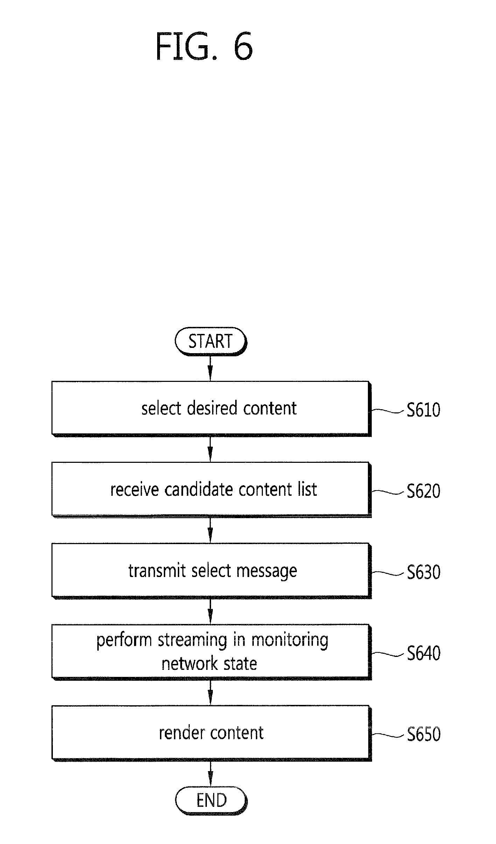

FIG. 6 is a flow chart illustrating an operation of the user terminals 10 of the real-time content transcoding system according to an embodiment of the present invention.

Referring to FIG. 6, the user terminal 10 selects desired contents (S610). And then, the user terminal 10 receives a candidate content list generated by the server 30 on the basis of the selected content (S620). The candidate content list includes a plurality of candidate contents, and respective candidate contents have different compression formats, bit rates, output files, and file formats, so the user terminal 10 selects candidate content appropriate to be rendered and transmits a select message (S630). Here, the user terminal 10 may generate the select message on the basis of information regarding transcoding corresponding to a method available for receiving and rendering in the terminal, or may generate the select message on the basis of information input by the user through a user interface (UI), and transmit the same to the server 30.

The user terminal 10 performs streaming, while monitoring a network state (S640). Namely, the user terminal 10 may monitor information regarding a network state and provide the same to the server 30 in real time, so that the server 30 may provide content, while adjusting a bit rate according to the network state. Here, when the network state has not been changed, information regarding the network state may not be transmitted, but when the network state has been changed, it is required to transmit information regarding the network state.

Finally, the user terminal 10 renders streamed content (S650).

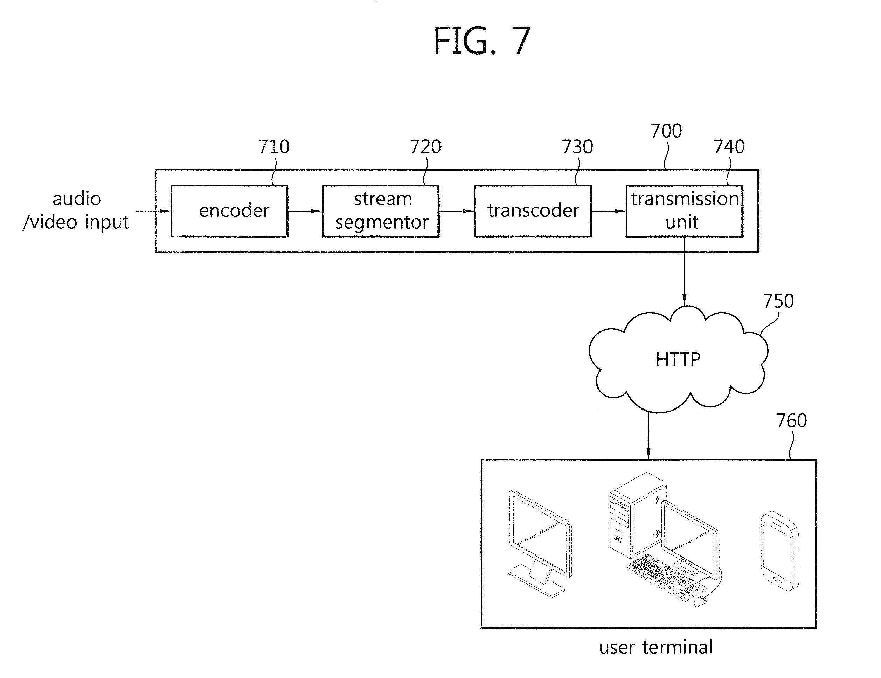

FIG. 7 is a view illustrating a streaming protocol applicable to a real-time content transcoding method according to an embodiment of the present invention. As illustrated in FIG. 7, a server 700 to which the real-time content transcoding method according to an embodiment of the present invention is applicable may include an encoder 710, a stream segmentor 720, a transcoder 730, and a transmission unit 740.

Live streaming refers to a scheme of sending imaged audio/video information to a video player of a user in real time such that it can be rendered or played. A conventional protocol for live streaming may include RTSP (Real-Time Streaming Protocol)/RTP (Real-time Transport Protocol), RTMP (Real-Time Messaging Protocol), and the like. A streaming server using these protocols is required to have a function of transmitting video data, analyzing information regarding a video, or reading and transcoding a video file according to a transmission standard. Thus, the streaming server may be costly. Also, in case of RTSP and RTP, since they exchange data through different network connections, a service may not be smooth in the presence of a firewall or in an environment in which a NAT (Network Address Translator) is frequently used.

An HLS system using an HTTP 750 as a transport channel has been proposed as an alternative. The HTTP 750, not based on a full-duplex scheme, requires a scheme for overcoming shortcomings for live streaming, but a configuration of a firewall is simple because the firewall may only need to pass only a request to the HTTP server 700. Since a request and answer corresponds in a one-to-one manner, communication with the server 700 even in an NAT environment is easy. Besides the firewall problem, advantageously, a cache structure for a Web service may also be used as is or an established CDN (Content Delivery Network) may also be used as is without being particularly changed.

In case of the HLS protocol, streaming data is included in an MPET-2 TS, segmented by time, and transmitted. Here, information regarding which file is to be rendered may be transferred through an m3u8 file.

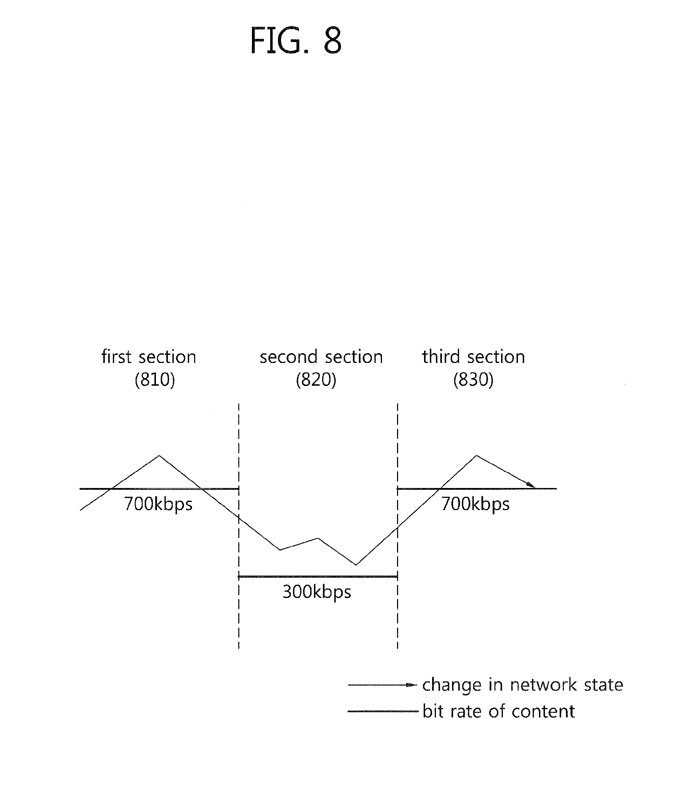

Referring to FIG. 8, the encoder 710 receives an audio/video input and encodes the received audio/video input initially.

The stream segmentor 720 may segment media data received at predetermined time intervals to generate a file. Also, the stream segmentor 720 may generate meta data m3u8 accessible to the generated file. Since HTTP is not based on a full-duplex scheme, a user terminal 760 should request it from the server 700 to receive a corresponding response. Namely, the server 700 transmits segmented video and video information to be rendered subsequently, together, to the user terminal 760.

The transcoder 730 transcodes files generated at divided time intervals according to a scheme (e.g., a file format, a bit rate, a compression format, or the like) requested by the user terminal 760. As described above, the transcoder 730 may be disposed within or outside the server 700.

The transmission unit 740 transmits the content segmented by the time and transcoded to the user terminal 760 by using the HTTP channel 750. The transmission unit 740 may not necessarily grouped with the encoder 710, the stream segmentor 720, and the transcoder 730 in the server 700 and may be included in an external Web server. In this case, any external Web server may be employed as long as it can read a transcoded file, include data in an HTTP response, and transmit the same.

The HLS protocol is different from other protocols as follows. First, the HLS protocol is different from the HTTP, in a scheme for transmitting content information, and second, in case of the HLS protocol, content data is segmented by the time through the stream segmentor 720 and transmitted.

FIG. 8 is a view illustrating bit rates of content according to a change in a network environment in HLS streaming according to an embodiment of the present invention.

Referring to FIG. 8, the server 30 may transcode data at an appropriate bit rate according to a network rate of the user terminal 10 and stream the same. Accordingly, the user may view a video ceaselessly although a network environment of the user is changed.

For example, when the user, who is using a streaming service in a Wi-Fi environment, moves to a cellular network environment such as 3G, an available network bandwidth is reduced. Here, the streaming service was being provided at an appropriate bit rate in the Wi-Fi environment, but currently, the user terminal 10 may fail to receive data, and thus, an image may not be properly displayed due to generation of buffering or shortage of data. In order to solve the problem of generation of buffering and screen distortion, the following method may be applied.

According to an embodiment of the present invention, the server 30 receives information regarding a network environment from the user terminal. The server 30 compares the received information regarding a network environment with a current bit rate. When the received information regarding a network environment is different by more than a threshold value, the server 30 provides control to change the bit rate. In FIG. 8, a difference between a network state value (e.g., a bandwidth) in a first section 810 and a current bit rate 700 kbps is more than a predetermined threshold value, so the server 30 changes the bit rate to the 300 kbps. Thereafter, since the network state value in a second section 820 is increased, a gap therebetween widens, and when the gap exceeds the threshold value, the server 30 changes the bit rate to 700 kbps in a third section 830. The server 30 may request an internal or external transcoder to change the bit rate, thus changing the bit rate of the transcoded content.

According to another embodiment of the present invention, the server 30 may predict a change in a network environment on the basis of a change in a network state, to adjust a bit rate. The server 30 may predict a change in a network environment through a change in a network state. For example, when a bandwidth is continuously reduced at a predetermined tilt, the server 30 may compare it with a threshold value to predict a change in a network environment. When a change in an environment is predicted in this manner, the server 30 may transcode content in a predetermined time interval and store the same in advance in order to solve a buffering problem. Namely, data may be missing as a bit rate is changed immediately after a network environment is changed, and in this case, the sever 30 may change a bit rate without buffering by using the previously transcoded content.

## Claims

1. A real-time content transcoding method to provide content by a server to a user terminal in real time, the method comprising:
generating a candidate content list on the basis of a transcoding-related information supportable by a transcoder, with respect to content requested by the user terminal;
transmitting the candidate content list to the user terminal; and
transcoding the content in real time, in a manner corresponding to a content information selected by the user terminal and transmitting the transcoded content to the user terminal.

2. The method of claim 1, wherein the candidate content list comprises at least any one of information among a compression format, a bit rate, an output file and a file format supportable by the transcoder.

3. The method of claim 1 or 2, wherein the candidate content list provides a uniform resource locator (URL) providing the content, and
in the transcoding of the content, the content is transcoded at a bit rate corresponding to the selected URL and transmitted.

4. The method of claim 1, 2 or 3, wherein the transcoding of the content comprises:
transcoding the content, while adjusting a bit rate adaptively on the basis of a network state, and transmitting the content.

5. The method of claim 4, wherein the transcoding of the content comprises:
receiving information regarding a network state from the user terminal in real time; and
changing the bit rate by comparing the received information regarding the network state with a current service bit rate.

6. The method of claim 5, wherein the transcoding of the content comprises:
predicting a network environment change through the received information regarding a network state;
transcoding content to be rendered for a predetermined period of time when a change in a network environment is predicted, and storing the same in advance in preparation for a change in a bit rate; and
transmitting the content without buffering by using the stored content at a point in time at which the bit rate is changed.

7. The method of any one of claims 1 to 6, wherein the server transmits the content in a HTTP live streaming (HLS) manner,
such that the server segments the content by the time, transcodes the content, and transmits the content to the user terminal.

8. A real-time content transcoding apparatus comprising:
a candidate content list generating unit configured to generate a candidate content list on the basis of information regarding transcoding supportable by a transcoder with respect to content requested by a user terminal;
a candidate content list transmission unit configured to transmit the candidate content list to the user terminal; and
a transcoding unit configured to transcode the content in real time in a manner corresponding to a content information selected by the user terminal, and transmit the transcoded content to the user terminal.

9. A real-time content receiving method to receive content by a user terminal from a server, the method comprising:
receiving a candidate content list generated on the basis of a transcoding-related information supportable by a transcoder, with respect to requested content;
transmitting a signal related to selection of one of contents included in the candidate content list to a server; and
receiving content transcoded in real time, in a manner corresponding to an information indicated by the selection-related signal.

10. The method of claim 9, wherein the transmitting of the selection-related signal comprises:
generating the selection-related signal on the basis of the transcoding-related information corresponding to a manner available to be received and rendered by the user terminal, or generating the selection-related signal on the basis of information input through a user interface (UI), and transmitting the same to the server.

11. The method of claim 9 or 10, wherein the candidate content list comprises at least any one of information among a compression format, a bit rate, an output file and a file format supportable by the transcoder.

12. The method of claim 9, 10 or 11, wherein the receiving of the content comprises:
receiving the content, while adjusting a bit rate adaptively on the basis of a network state.

13. The method of claim 12, wherein the receiving of the content comprises:
monitoring the network state; and
transmitting information regarding a network state to the server in real time.

14. An apparatus for receiving content from a sever in real time, the apparatus comprising:
a list reception unit configured to receive a candidate content list generated on the basis of a transcoding-related information supportable by a transcoder that transcodes a requested content;
a selection-related signal transmission unit configured to transmit a signal related to selection of one of contents included in the candidate content list to the server; and
a content reception unit configured to receive content transcoded in a manner corresponding to an information indicated by the selection-related signal.

15. A real-time content transcoding system comprising:
a server configured to generate a candidate content list on the basis of a transcoding-related information supportable by a transcoder with respect to content requested by a user terminal, transmit the generated candidate content list to the user terminal, transcode the content in real time, in a manner corresponding to a content information selected by the user terminal, and transmit the transcoded content to the user terminal; and
a user terminal configured to receive the candidate content list, transmit a signal related to selection of one of contents included in the candidate content list to the server, and receive a content transcoded in real time, in a manner corresponding to an information indicated by the selection-related signal.
